# EUROPEAN PATENT APPLICATION

(11) **EP 4 595 768 A2**
(43) Date of publication of application: **06.08.2025**
(21) Application number: 25170546.3
(22) Date of filing: 27.12.2016
(51) Int. Cl.: A23K 10/30, A23K 20/111, A23K 20/163, A23K 50/40, A23K 50/42, A23K 40/25, A23K 40/30

(54) **PET FOOD COMPOSITIONS**

(30) Priority: 30.12.2015 WO PCT/US2015/068193
(62) Divisional of application: 16825682.4
(71) Applicant: Hill's Pet Nutrition, Inc., Topeka, KS 66603 (US)
(72) Inventor: JACKSON, Matthew, Topeka,, 66604 (US); JEWELL, Dennis Edward, Lawrence, 66049 (US)
(74) Representative: Wichmann, Hendrik

(57) **Abstract**

Described herein are controlled release pet food compositions comprising: a matrix comprising: a fiber component comprising a high solubility fiber source and low solubility fiber source, and a polyphenol source; wherein the matrix is adapted to deliver the polyphenol source tot he lower gastrointestinal (GI) tract of a mammal after ingestion by the mammal. Methods of making and using these compositions are also described.

## Description

### CROSS-REFERENCE TO RELATED APPLICATION

This application claims the benefit of priority from PCT/US2015/068193, filed December 30, 2015, the entirety of which is hereby incorporated herein by reference.

### BACKGROUND

Pets require a healthy diet and proper digestion for continued growth and ordinary wellbeing. However, gastrointestinal distress commonly interferes with the ordinary digestion of common pet food compositions. Some of these problems can be quite serious, such as inflammatory bowel disease (IBD) and other chronic digestive conditions. IBD is commonly accompanied by diarrhea, which can be extremely unpleasant to the pet harboring the condition or to a pet owner who must clean up after the pet, particularly if on a chronic basis.

One mechanism for treating IBD and improving inflammatory status in pets is to administer beneficial agents, such as medicaments, prebiotics, probiotics, and the like, through traditional pet food compositions. However, ensuring that the benefit agent is delivered to the target site has been a challenge. As such, there exists a need for pet food compositions which are able to control the release of a benefit agent and ensure that the benefit agent is delivered to the target site. Embodiments of the present invention are designed to meet these needs.

### BRIEF SUMMARY

In some embodiments, the present invention provides a controlled release pet food composition comprising: a matrix comprising: a fiber component comprising a high solubility fiber source and low solubility fiber source, and a polyphenol source; wherein the matrix is adapted to deliver the polyphenol source to the lower gastrointestinal (GI) tract of a mammal after ingestion by the mammal.

Other embodiments provide a method of forming a pet food composition, comprising the steps of: extruding a matrix composition to form a controlled-release kibble, the matrix composition comprising: a fiber component comprising a high solubility fiber source and low solubility fiber source, and a polyphenol source; wherein the matrix is adapted to ensure that the polyphenol source is not available for digestion or absorption in the upper gastrointestinal (GI) tract of a mammal when ingested by the mammal; and applying a surface coating to the kibble.

Still further embodiments provide a method for treating, preventing, or ameliorating a symptom of an inflammatory disease, condition or disorder, e.g. inflammatory bowel disease, in a mammal, comprising administering any one of the compositions described herein to a mammal, e.g. a companion animal, in need thereof.

Some embodiments provide a method of beneficially manipulating the gut microflora of a mammal, comprising administering any one of the compositions described herein to the mammal, e.g. a companion animal, in need thereof.

### BRIEF DESCRIPTION OF THE DRAWINGS

Figures 1A, 1B and 1C depict data illustrating that an exemplary composition of the present invention successfully provides polyphenols to the colon where they are metabolized by resident gut microbiota.
Figures 2A, 2B and 2C depict data illustrating that an exemplary composition of the present invention provides elevated serum levels of microbial post-biotics.
Figure 3 provides a histogram depicting the results of a canine stool score comparison between a composition of the present invention and a comparative composition.
Figure 4 depicts the stool quality results from a clinical intervention trial involving both healthy and IBD canines.

### DETAILED DESCRIPTION

In some embodiments, the pet food compositions set forth herein provide a multifactorial therapy based on nutritive dietary factors that: (1) decrease allergenicity due to the use of hydrolyzed proteins; (2) provide readily digestible macronutrients; (3) provide glutaminyl amino acids that provide metabolic intermediates to enterocytes; (4) provide immune modulators that decrease inflammatory responses; and (5) provide microbial cell wall fractions that promote tolerance or hindgut commensal biota. In other embodiments, the pet food compositions increase gut microbial production of metabolic end products of dietary polyphenols and/or enhance the absorption of these dietary polyphenols into systemic circulation.

In some embodiments, the pet food compositions of the present invention comprise a matrix comprising dietary components capable of providing the desired effect of immune optimization. Specifically, the compositions may comprise a matrix comprising an inert, non-fermentable fiber source having polyphenols chemically or physically bound thereto in such a manner so as to be not available for digestion or absorption in the upper gastrointestinal (GI) tract. In some embodiments, these fiber-bound polyphenols bypass the upper GI tract and arrive intact to the colon of the animal. It is believed that the gut microbes metabolize dietary fiber; and in the process, liberate the fiber-bound polyphenols. These newly liberated polyphenols are also subject to microbial metabolism, producing small biomolecules called "post-biotics". Post-biotics are absorbed across the colon and distributed systemically where they have pleiotropic effects, including immune modulation which helps to treat IBD and improve the inflammatory response. One benefit of the use of a low solubility fiber source (e.g. lignin), which is poorly soluble in the mammalian lower GI tract, is that it provides for stool bulking.

In some embodiments, the matrix comprises a fibrillary network. In some embodiments, the fibrillary network comprises fibers having varying dissolution rates. In some embodiments, the dissolution rates of the fibers are pH dependent. In some embodiments, the dissolution rates are temperature dependent. In some embodiments, the fibrillary network comprises interfibrillary spaces. In some embodiments, the interfibrillary spaces are of dimension sufficient to permit entry of a dissolution agent into the fibrillary network.

As used herein, "dissolution agent" is intended to include a fluid, material, or the like, which enhances the rate of dissolution of the matrix, thereby facilitating release of the benefit agent (e.g. a polyphenol source).

In some embodiments, the matrix comprises a benefit agent which is bound by the fiber source. In some embodiments, the benefit agent can be any ingredient for which targeted delivery in accordance with the present disclosure would be desirable.

In some embodiments, the benefit agent is a polyphenol source. In some embodiments, the polyphenol source is substantially unavailable to the upper GI tract, as a result of the dissolution profile of the controlled release matrix.

Some embodiments provide a controlled release pet food composition comprising: a matrix comprising: a fiber component comprising a high solubility fiber source and low solubility fiber source, and a polyphenol source; wherein the matrix is adapted to deliver the polyphenol source to the lower gastrointestinal (GI) tract of a mammal after ingestion by the mammal. In some embodiments, the weight ratio of high solubility fiber source to low solubility fiber source is from about 1 : 20 to about 1 : 1. In other embodiments, the weight ratio of high solubility fiber source to low solubility fiber source is from about 1 : 15 to about 1 : 2. Still further embodiments provide compositions wherein the weight ratio of high solubility fiber source to low solubility fiber source is from about 1 : 10 to about 1 : 3. Other embodiments provide compositions wherein the weight ratio of high solubility fiber source to low solubility fiber source is from about 1 : 5 to about 1 : 3. While other embodiments provide compositions wherein the weight ratio of high solubility fiber source to low solubility fiber source is about 1 : 4. In some embodiments, the weight ratio of high solubility fiber source to low solubility fiber source is about 1 : 4.3.

In some embodiments, the terms "high solubility fiber" and "soluble fiber" may be used interchangeably. In some embodiments, the terms "low solubility fiber" and "insoluble fiber" may be used interchangeably.

In some embodiments, the high solubility fiber source comprises oat bran, buckwheat groats, pea bran, barley, tomato pomace, citrus pulp, beet pulp, and a combination of two or more thereof. In some embodiments, the low solubility fiber source comprises a cellulosic material, a pecan fiber, or a combination thereof.

In some embodiments, the polyphenol source is of food or plant origin. In some embodiments, the polyphenol source of food origin comprises a polyphenol of fruit or vegetable origin. In some embodiments, the polyphenol source comprises a flavonoid or a phenolic acid.

In some embodiments, the polyphenol source provides a polyphenol selected from: dehydroxy rosmarinic acid, Coumaroylnepitrin, eupafolin, carnosol, scutellarin, kaempferol, rosmarinic acid, rosmanol, cirsimaritin, luteolin, 6-methoxy-luteolin, 7-epirosmannol, quercetin, catechin, hesperidin, cyanidin, and a combination of two or more thereof.

Some embodiments further comprise a source of hydrolyzed animal or plant protein comprising an amino acid profile. In some embodiments, the source of hydrolyzed animal or plant protein comprises chicken liver. In some embodiments, the source of hydrolyzed animal or plant protein is present in an active content of from about 25 to about 45 wt. %.

In other embodiments, the compositions comprise a source of omega-3, omega-6 or omega-9 fatty acids. Some embodiments comprise high docosahexaenoate fish oil. In some embodiments, the active content of the high docosahexaenoate fish oil is from about 0.5 to about 2.5 wt. %.

Still further embodiments provide methods for treating, preventing, or ameliorating a symptom of an inflammatory disease, condition or disorder, e.g. inflammatory bowel disease, in a mammal, comprising administering an effective amount of any one of the compositions described herein.

Some embodiments provide methods for beneficially manipulating the gut microflora of a mammal, comprising administering an effective amount of any one of the compositions described herein to a mammal in need thereof.

Yet other embodiments provide method of forming a pet food composition, comprising the steps of: extruding a matrix comprising: a fiber component comprising a high solubility fiber source and low solubility fiber source, and a polyphenol source; applying a surface coating to the kibble; wherein the matrix is adapted to deliver the polyphenol source to the lower gastrointestinal (GI) tract of a mammal after ingestion by the mammal. In some embodiments, the surface coating comprises a palatant.

In some embodiments, the present invention is directed to a controlled release composition for companion animals that can be orally administered by veterinarian, pet owner or other caregiver. The composition of the invention is chewable, without any significant loss of the controlled release property. In particular, the benefits associated with the controlled release functionality are substantially maintained even after mastication by the animal. Thus it will be understood that chewable in the present context means that the controlled release performance of the dosage form is effectively resistant to chewing.

Although compositions of the present invention are generally chewed, the present disclosure is intended to encompass compositions which provide controlled release of the benefit agent after swallowing.

As used herein, "controlled release" refers to the rate of release of a pharmaceutically active agent as a function of some property of the dosage form. For example, 1) targeted release, wherein the benefit agent is adapted to be released at a particular location within the body; 2) delayed release, wherein there is a time lag after ingestion of the composition and before the release of the benefit agent is initiated; and 3) pulsatile release, wherein the benefit agent is released in an immediate release or modified release fashion, e.g. targeted or delayed, followed by a time period in which there is very little or no release, followed by yet another period of immediate or modified release and so on; one or more pulses of release can be thus obtained.

As appreciated by those of skill in the art, other delivery profiles are possible and all are considered to be within the scope of controlled release for purposes of the invention.

In some embodiments, the controlled release compositions of the present invention provide a benefit agent (e.g. a polyphenol) in particulate form. In some embodiments, the benefit agent is provided in the form of particles having a size such that when the composition is chewed by an animal the benefit agent (particle) will not be further comminuted to any significant degree.

In addition to the specific methods described herein, the compositions of the present invention can be prepared by various techniques known to those skilled in the art.

In some embodiments, the particulates have an average particle size of up to about 5000 µm; more preferred is an average particle size of about 10 µm to about 5000 µm; still more preferred is an average particle size of about 50 µm to about 2000 µm; yet still more preferred is an average particle size of about 100 µm to about 1000 µm. As one skilled in the art will appreciate, the particles may be of any size of shape as long as they provide the targeted delivery described herein.

In addition to the high solubility and low solubility fiber sources described herein, additional ingredient, e.g. polymers, may be used to control the release of the benefit agent. For example, pH sensitive polymers which are typically insoluble at low pH, e.g. pH of from 1 to about 5 as generally found in the stomach, but soluble at higher pH, e.g. greater than pH of 5.5, as typically encountered in the small intestine. In particular, suitable polymers include without limitation: hydroxypropylmethyl cellulose, ethylcellulose, Eudragit RL100, Eudragit RS100, mixtures of Eudragit RL100/RS100, Eudragit S100, Eudragit NE30D, cellulose acetate, cellulose acetate butyrate, silicone, ethylcellulose dispersions (commercially available as Aquacoat^{®} FMC and Surrelease^{®} (coloron).

As used herein, the term "companion animal" refers to domesticated animals. Companion animals exclude humans. Preferably, the animal is a mammal. Examples of companion animals include, but are not limited to, dogs, cats and horses. The preferred companion animals are dogs and cats.

Some embodiments of the present invention comprise a "palatant" or "palatability improving agent". As used herein, the term "palatability improving agent" or "palatant" include any composition that alters the palatability of the composition to which it is added. The palatability improving agents of the invention can be meat-based or non-meat based derived from meat.

In some embodiments, the pet food composition generally comprises hydrolyzed animal or plant protein comprising a nutritionally complete amino acid profile (e.g., dried chicken livers), peptidyl glutamine (e.g., Hyvital^{®} wheat glutamine PN), the insoluble, inert fibers as set forth herein (pecan fiber, oat, and cellulose), the probiotic soluble fiber as set forth herein (e.g., beet pulp), the fiber-bound polyphenols as set forth herein (e.g., cranberry pomace, pomegranate extract, green tea extract), medium chain triglycerides, high docosahexaenoate fish oil, ginger root powder, boswellia serrata extract, and yeast beta glucan.

In another embodiment, the pet food composition comprises the components set forth in Table 1 below in the designated amounts, based upon the total weight of the pet food composition.

**Table 1**

| **Description** | **Preferred Active Content Range (w/w %)** |
|---|---|
| Chicken, livers, hydrolyzed, dry | 25-45 |
| Hyvital^{®} wheat glutamine PN | 0.25-2 |
| Lysine, 1, hydrochloride | 0.1-0.75 |
| Methionine, dl | <0.08 |
| Taurine | 0.075-0.2 |
| Captex^{®} 355 Medium Chained Triglyceride | 1-5 |
| Cellulose, coarse | 1-5 |
| Beet, pulp | 1-3 |
| OatWell^{®} 22 oat bran | 2-5 |
| Pecan Fiber | 1-5 |
| MEG-3^{®} 0355TG Fish Oil | 0.5-2.5 |
| Ginger Root Powder | 0.5-2 |
| Cranberry Pomace | 0.1-0.4 |
| Pomegranate Extract WS | 0.1-0.4 |
| Green Tea PE 50% EGCG WS | 0.1-0.4 |
| Boswellia PE 65% Boswellic Acids | 0.05-0.3 |
| Sensimune^{™} 75 (Yeast Cell Wall) | 0.05-0.3 |

The pet food compositions set forth herein may be formed by extrusion to form a kibble-type pet food composition. In some embodiments, the milled raw ingredients of the composition are extruded and then a surface coating comprising a palatant and/or a nutritional oil is applied. In some embodiments, the kibble is spray coated in a tumbling mixer with a composition comprising a palatant and/or a nutritional oil. In other embodiments, the kibble is coated using a vacuum enrobing technique, wherein the kibble is subjected to vacuum and then exposed to coating materials after which the release of the vacuum drives the coating materials inside the kibble.

The invention will now be described in conjunction with the following, non-limiting examples.

### EXAMPLES

### Example 1

An exemplary pet food composition (Example 1) is prepared as set forth in Table 2 (below). All amounts are provided in weight percent, based upon total weight of the pet food composition. The composition is formulated according to the nutrition standards set forth by the American Associated of Feed Control Officials (AAFCO) and the National Research Council (NRC). The composition is produced by extrusion, dried, and then coated with palatants.

**Table 2**

| **Ingredient** | **Example 1** |
|---|---|
| | **w/w %** |
| Chicken, livers, hydrolyzed, dry | 36.79 |
| Corn, starch, common canning | 32.45 |
| Choice White Grease | 1.00 |
| Vitamin Premix | 0.12 |
| Vitamin, premix, canine/feline, z/d, dry | 0.20 |
| Mineral, premix, 2305 | 0.08 |
| Vitamin E, oil, 29% | 0.10 |
| Hyvital^{®} Wheat Glutamine PN | 1.00 |
| Lysine, 1, hydrochloride | 0.50 |
| Methionine,dl | 0.07 |
| Taurine | 0.10 |
| Captex^{®} 355 Medium Chained Triglyceride | 4.00 |
| Cellulose, coarse | 3.00 |
| Lactic acid, food grade | 1.50 |
| Dicalcium phosphate | 1.20 |
| Chicken, liver, digest, optimizor LDPE H | 2.00 |
| Sodium chloride, iodized | 0.40 |
| Choline chloride, liquid, 70% | 0.25 |
| Calcium carbonate | 2.00 |
| Potassium chloride | 0.70 |
| Beet, pulp | 2.50 |
| OatWell^{®} 22 oat bran | 3.00 |
| Pecan Fiber | 2.00 |
| MEG-3^{®} 0355TG Fish Oil | 1.50 |
| Ginger Root Powder | 1.00 |
| Palatant | 0.75 |
| Natural flavor, Pork, Liver, Digest, D'T | 0.50 |
| Glyceryl monostearate | 0.25 |
| Cranberry Pomace | 0.20 |
| Pomegranate Extract WS | 0.20 |
| Green Tea PE 50% EGCG WS | 0.20 |
| Boswellia PE 65% Boswellic Acids | 0.20 |
| Sensimune^{™} 75 (Yeast Cell Wall) | 0.15 |

To test the efficacy of the composition, an IACUC (Institutional Animal Care and Use Committee)-approved protocol is implemented which enrolled 13 canines having IBD, along with 13 healthy controls matched for age, weight and sex. Canines are assessed by analyzing blood and fecal markers of biochemical and clinical health. The study is a longitudinal cross-over design with both healthy dogs and dogs having IBD receiving each diet (Example 1 and a control diet). The control diet pet food composition is a commercially available under the brand Hill's^{®} i/d^{®} from Hill's Pet Nutrition, Inc. Diets are fed for four (4) weeks, after all of the animals are given a prefeed of one (1) week on whichever diet the dogs are consuming prior to test enrollment. Testing is then performed at a baseline time point (considered week 0; immediately after the 1 week prefeed), as well as at week 4 (Phase 1) and week 8 (Phase 2).

Stool scores are assessed on a five-point scale, with 5 being the healthiest (firmest) stool. Stools are further subjected to moisture and ash analysis, and the ash is subjected to mineral analysis. Bioactive markers of systemic chronic inflammation are also assessed in serum via metabolomics screening. The circulating level of basophils in the blood are also analyzed by clinical instrumentation. Lastly, stool quality is also examined by subjective (visual firmness score) and objective (osmolytes, organic dry matter).

As shown in Table 3 below, the test diet increased the number of stools with stool scores of 5 relative to the baseline and control diet.

**Table 3**

| **Time Point** | **Canine Group** | **Diet** | **Fecal Scores** |
|---|---|---|---|
| Baseline | Healthy | Baseline | 4, 5, 4, 5, 4, 4, 5, 5, 5, 5, 5, 5, 4 |
| | IBD | Baseline | 5, 4, 4, 4, 5, 5, 5, 4, 4, 5, 4, 4, 4 |
| Phase 1 | Healthy | Control | 5, 4, 5, 5, 4, 4, |
| | Healthy | Example 1 | 5, 5, 5, 5, 5, 5, 5 |
| | IBD | Control | 4, 2, 4, 5, 4 |
| | IBD | Example 1 | 5, 4,5, 5, 4, 4, 4 |
| Phase 2 | Healthy | Control | 4, 5, 5, 4, 5, 2, 5 |
| | Healthy | Example 1 | 5, 4, 5, 5, 4, 4 |
| | IBD | Control | 5, 3, 4, 3, 4, 5, 4 |
| | IBD | Example 1 | 4, 5, 5, 5, 4 |

As shown in Table 4 below, with respect to the moisture and ash analysis, the test diet consistently reduced moisture in stools and increased organic dry matter, and also generally decreased levels of sodium and potassium in feces, which has been shown to be associated with improved stool quality and reduced incidence of diarrhea.

**Table 4**

| **Time Point** | **Canine Group** | **Diet** | **Average Potassium Level (ppm)** | **Average Sodium Level (ppm)** | **Average Moisture Level (w/w %)** | **Average Organic Matter (w/w %)** |
|---|---|---|---|---|---|---|
| Baseline | Healthy | Baseline | 31.81 | 24.10 | 69.69 | 23.23 |
| | IBD | Baseline | 24.50 | 24.47 | 69.70 | 22.69 |
| Phase 1 | Healthy | Control | 23.27 | 32.38 | 67.07 | 25.27 |
| | Healthy | Example 1 | 21.99 | 13.67 | 65.22 | 26.72 |
| | IBD | Control | 34.77 | 23.19 | 66.14 | 23.71 |
| | IBD | Example 1 | 18.90 | 11.95 | 65.84 | 26.36 |
| Phase 2 | Healthy | Control | 25.26 | 23.06 | 67.37 | 25.38 |
| | Healthy | Example 1 | 21.42 | 14.67 | 66.51 | 25.88 |
| | IBD | Control | 22.20 | 18.23 | 67.62 | 25.00 |
| | IBD | Example 1 | 23.86 | 17.82 | 66.13 | 26.86 |

As shown in Table 5 below, regarding the assessment of the bioactive markers of inflammation, the test diet was shown to decrease levels of various phosphatidyl arachidonates, the precursors to pro-inflammatory prostaglandins, thus improving the inflammatory status in the dogs having IBD.

**Table 5**

| **Time Point** | **Canine Group** | **Diet** | **Average PA 1** | **Average PA 2** | **Average PA 3** | **Average PA 4** | **Average PA 5** |
|---|---|---|---|---|---|---|---|
| | | | **Relative Fold Level** | | | | |
| Baseline | Healthy | Baseline | 1.21 | 0.86 | 0.85 | 1.15 | 1.08 |
| | IBD | Baseline | 1.20 | 1.12 | 1.19 | 1.38 | 1.05 |
| Phase 1 | Healthy | Control | 0.98 | 1.12 | 1.08 | 1.58 | 1.15 |
| | Healthy | Example 1 | 1.19 | 1.05 | 1.17 | 0.84 | 1.07 |
| | IBD | Control | 1.08 | 1.10 | 0.98 | 1.23 | 1.08 |
| | IBD | Example 1 | 0.93 | 0.86 | 0.98 | 0.67 | 0.80 |
| Phase 2 | Healthy | Control | 0.80 | 1.08 | 1.04 | 1.22 | 1.19 |
| | Healthy | Example 1 | 0.86 | 0.97 | 1.04 | 0.92 | 0.89 |
| | IBD | Control | 1.07 | 0.96 | 0.84 | 0.95 | 0.95 |
| | IBD | Example 1 | 0.57 | 0.92 | 0.84 | 0.841. | 0.68 |

| | | | | | | | |
|---|---|---|---|---|---|---|---|
| * PA 1 = 1-arachidonoyl-GPI (20:4) * PA 2 = Palmitoyl-arachidonoyl-glycerophosphocholine (2) * PA 3 = Stearoyl-arachidonoyl-glycerophosphocholine (2) * PA 4 = Stearoyl-arachidonoyl-glycerophosphoethanolamine (1) * PA 5 = Stearoyl-arachidonoyl-glycerophosphoinositol (2) | | | | | | | |

As used herein, "relative fold level" refers to a normalized concentration level that relates values for each sample to an average for all samples.

As shown in Table 6 (below), with respect to the basophil levels, the test diet increased basophil abundances in dogs having IBD, which can provide immune-normalization in these animals.

**Table 6**

| **Time Point** | **Canine Group** | **Diet** | **Average Basophils 1000 cells/µL** |
|---|---|---|---|
| Baseline | Healthy | Baseline | 170 |
| | IBD | Baseline | 70 |
| Phase 1 | Healthy | Control | 130 |
| | Healthy | Example 1 | 160 |
| | IBD | Control | 100 |
| | IBD | Example 1 | 270 |
| Phase 2 | Healthy | Control | 170 |
| | Healthy | Example 1 | 80 |
| | IBD | Control | 190 |
| | IBD | Example 1 | 60 |

As set forth in Table 7 below, regarding the analysis of the fecal markers of intestinal health, it is known that fecal polyamines provide intestinal health benefits, especially when generated in situ in the intestine by gut microbes rather than being administered through diet. The test diet was shown to increase the levels of fecal polyamines above the baseline.

**Table 7**

| **Time Point** | **Canine Group** | **Diet** | **Average Total Polyamines (Relative Fold Level)** |
|---|---|---|---|
| Baseline | Healthy | Baseline | 4.11 |
| | IBD | Baseline | 9.13 |
| Phase 1 | Healthy | Control | 7.53 |
| | Healthy | Example 1 | 14.32 |
| | IBD | Control | 13.08 |
| | IBD | Example 1 | 14.39 |
| Phase 2 | Healthy | Control | 10.57 |
| | Healthy | Example 1 | 21.47 |
| | IBD | Control | 11.30 |
| | IBD | Example 1 | 15.00 |

The data described in Tables 3 to 7, demonstrate that an exemplary composition of the present invention (Example 1) can improve IBD symptoms by improving stool quality, stool biochemical profile, circulating markers of biochemical and cellular immune status, and fecal metabolites associated with intestinal health.

### Example 2

To determine the immune optimization of a second exemplary pet food composition, a feeding trial is performed. An exemplary pet food composition (Example 2) is prepared as set forth in Table 8 below. All amounts are provided in weight percent, based upon total weight of the pet food composition. The composition is formulated according to the nutrition standards set forth by the American Associated of Feed Control Officials (AAFCO) and the National Research Council (NRC). The composition is produced by extrusion, dried, and then coated with a palatant. The process used to manufacture the composition described in Table 8 (below), ensures the creation of the inventive matrix of present invention.

**Table 8**

| **Ingredient** | **Example 2** |
|---|---|
| | **w/w %** |
| Rice, brewers | 25.00 |
| Pea, protein concentrate | 10.00 |
| Chicken Dried 10% Ash | 8.00 |
| Chicken, ground, fresh | 7.00 |
| Sorghum, whole | 6.36 |
| Chicken Meal | 6.14 |
| Pork Fat, Choice White Grease | 1.00 |
| Flax, seed, whole | 3.00 |
| Eggs, dried, granulated | 5.50 |
| Pecan Fiber | 4.80 |
| G03 Buckwheat Groats | 4.00 |
| Oat, groats | 4.00 |
| Captex 355 Medium Chained Triglyceride | 3.00 |
| Chicken, liver, digest, optimizor LDPE H | 2.00 |
| Oat, fiber | 1.50 |
| Citrus pulp | 1.50 |
| Beet, pulp, ground, fine | 1.50 |
| Lactic acid, food grade | 1.50 |
| Fish oil, TG, 18/12, NP | 1.20 |
| Flav Gen#1 + CWG | 1.00 |
| Vitamin Premix | 0.30 |
| Potassium chloride | 0.30 |
| Carnitine, 1, 10% | 0.27 |
| Natural flavor, Pork, Liver, Digest, D'T | 0.25 |
| Choline chloride, liquid, 70% | 0.18 |
| Sensimune 75 (Yeast Cell Wall) | 0.15 |
| Vitamin E, oil, 29% | 0.14 |
| Taurine | 0.10 |
| Sodium chloride, iodized | 0.10 |
| Lysine, 1, hydrochloride | 0.10 |
| Mineral, premix, 2305 | 0.04 |
| Oat Fiber, Fruit, Vegetable blend | 0.04 |
| Dicalcium phosphate | 0.04 |

A feeding trial is carried out on 24 canines in accordance with IACUC protocols. Blood is drawn prior to and after consumption of an exemplary composition of the present invention (Example 2) for six (6) weeks and ex vivo whole blood stimulation is performed. Specifically, whole blood is drawn from the canines who consumed Example 2 and split into two samples - one stimulated with bacterial endotoxin to induce acute inflammatory response, and the second kept in a parallel incubation without any stimulation. After 24 hours of incubation, the cultured blood (with and without stimulation) is subjected to analysis for inflammatory cytokines. The unstimulated condition provides a proxy assessment of basal inflammation, while the stimulated sample indicates the capacity for response to an immune challenge. Optimization is achieved when consumption of Example 2 increases the level of inflammatory cytokines in the unstimulated (basal) sample. Cytokines are measured by enzyme linked immunosorbent assay (ELISA).

As shown in Tables 9 and 10 (below), consumption of Example 2 increased stimulates cytokine production in a companion animal (e.g. canines). The cytokines which are analyzed are as follows: IL-12 (Interleukin 12), IL-6 (Interleukin 6), VEGF-A (vascular endothelial growth factor), NGF (nerve growth factor), SCF (stem cell factor), TNF-α (tumor necrosis factor alpha), MCP-1 (monocyte chemoattractant protein-1), INF-γ (interferon gamma), and IL-10 (Interleukin 10). Six of the ten measured cytokines statistically increased in stimulated whole blood from canines having consumed Example 2 for six weeks relative to baseline. In contrast, dietary consumption of Example 2 left subjects with nearly unchanged cytokine production from unstimulated whole blood. This indicates that, despite Example 2 increasing a canine's response to acute immune stimulation, it does not increase basal inflammation.

**Table 9**

| **Diet** | **Average IL-12** | **Average IL-6** | **Average VEGF-A** | **Average NGF** | **Average SCF** | **Average TNF-α** |
|---|---|---|---|---|---|---|
| | **pg/mL** | | | | | |
| Baseline | 412.44 | 571.32 | 69.21 | 7.18 | 37.57 | 1089.93 |
| Example 2 | 565.77 | 796.12 | 103.00 | 11.64 | 46.70 | 1381.04 |

**Table 10**

| **Diet** | **Average MCP-1** | **Average VEGF-A** | **Average INF-γ** | **Average IL-10** |
|---|---|---|---|---|
| | **pg/mL** | | | |
| Baseline | 136.44 | 13.95 | 5.69 | 4.49 |
| Example 2 | 70.68 | 10.95 | 3.75 | 5.18 |

### Example 3

Two additional experiments are conducted to determine post-biotic production after consumption of exemplary pet food compositions of the present invention (Examples 2 and 3). The ingredient listing for Example 2 is set forth hereinabove in Table 8; and the ingredient listing for Example 3 is set forth in Table 11 (below). All amounts are provided in weight percent, based upon total weight of the pet food composition. The compositions are formulated according to the nutrition standards set forth by the American Associated of Feed Control Officials (AAFCO) and the National Research Council (NRC). The compositions may be extruded, dried, and then coated with a composition comprising a palatant. Similar to Example 2, the process used to manufacture the composition described in Table 11, ensures the creation of the inventive matrix of present invention.

**Table 11**

| **Ingredient** | **Example 3 (w/w %)** |
|---|---|
| Rice, Brewers | -- |
| Chicken Meal | 7.00 |
| Pea, protein concentrate | 8.00 |
| Cellulose, coarse | 4.00 |
| Chicken Dried 10% Ash | 6.00 |
| Barley, pearled, cracked | 20.00 |
| Chicken, ground, fresh | 8.00 |
| Flax, seed, whole | 2.00 |
| Coconut oil preserved | 4.00 |
| Chicken, liver, digest, optimizor LDPE H | 3.00 |
| Lactic acid | 1.50 |
| Methionine,dl | 0.64 |
| Potassium chloride | 0.50 |
| Sodium chloride, iodized | 0.60 |
| Fish oil, TG, 18/12, NP | 0.50 |
| Calcium carbonate | 0.30 |
| Choline chloride, liquid, 70% | 0.25 |
| Carnitine, 1, 10% | 0.30 |
| Vitamin Premix | 0.18 |
| Vitamin E, oil, 29% | 0.17 |
| Mineral, premix, 2305 | 0.08 |
| Taurine | 0.06 |
| Oat, groats | 10.00 |
| Buckwheat Groats | 6.92 |
| Pea, bran, meal | 5.00 |
| Tomato, pomace, | 5.00 |
| Citrus pulp | 3.00 |
| Beet, pulp, ground, fine | 3.00 |

Under the experiments described below, canines are fed diets in accordance with IACUC protocols.

### Experiment A - Feces Evaluation

Canines are fed a control diet or a diet consisting of Example 2 for six (6) weeks in a cross-over design. Subjects participated in a pre-feed phase consuming a maintenance diet (Hill's^{®} Science Diet^{®} Canine Adult, commercially available from Hill's Pet Nutrition, Inc.) for three (3) weeks prior to consuming the exemplary composition of the present invention (Example 2). A baseline measurement is performed at the conclusion of the pre-feed phase. The control diet contains lower levels of dietary sources of fiber-bound polyphenols and total fiber content, and the fiber is predominately in an insoluble form.

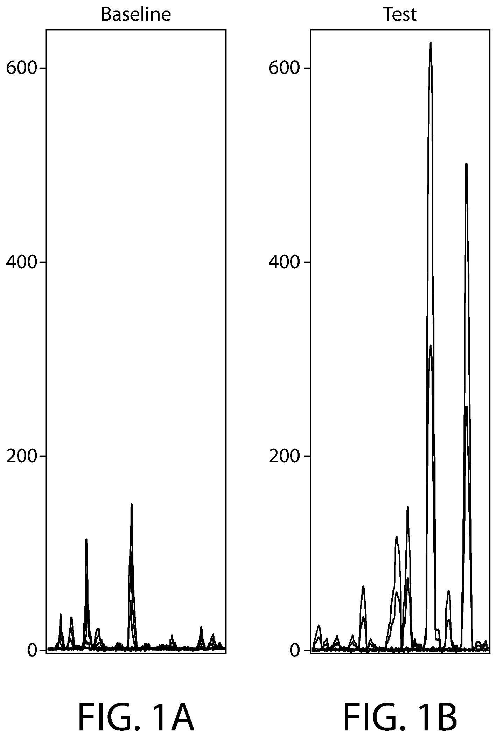

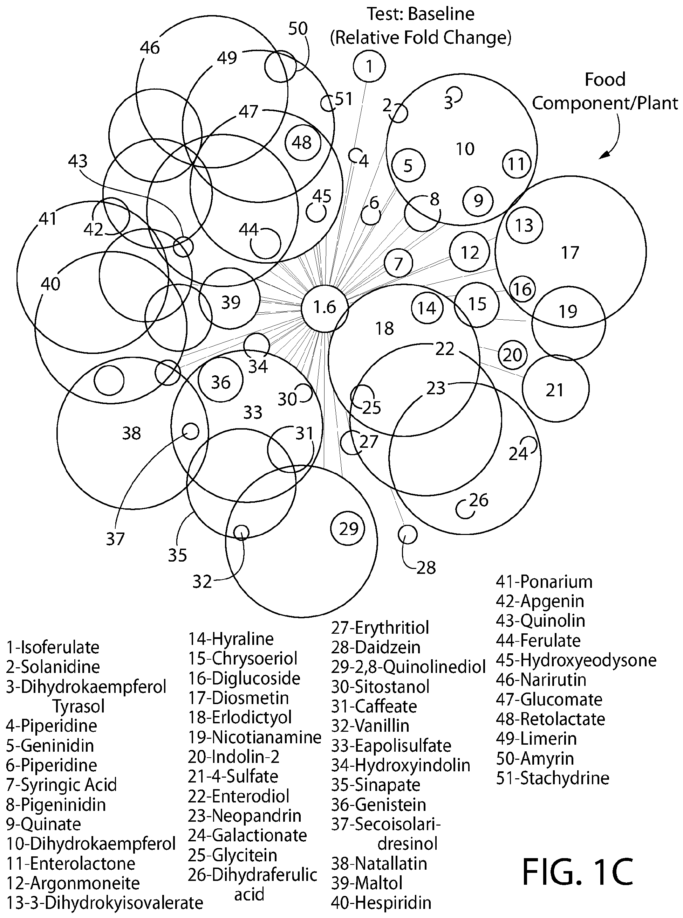

To assess the ability of Example 2 to provide targeted delivery of a polyphenol to the colon, fecal samples from canines fed a control diet and canines fed Example 2 are analyzed for differences in levels of polyphenols and polyphenol metabolites. Results of a multivariate profiling analysis of the polyphenols and metabolites are shown in Figures 1A & 1B, wherein the X axis depicts a series of polyphenols and their metabolites, and the Y axis scales relative levels of each of these found in the feces at baseline (Figure 1A); and after consuming a test diet consisting of the composition of Example 2 (Figure 1B). A pathway enrichment analysis is performed on the relative levels of polyphenols and metabolites (Figure 1C), with the food/plant component cluster showing statistical increase in test diet-fed dogs relative to baseline. As the data demonstrates, a comparison of relative levels of fecal polyphenols and post-biotics indicates that a diet consisting of Example 2 increases targeting of these bioactive agents to the colon more effectively than a diet consisting of a commercially available high-quality canine maintenance diet that did not include the inventive combination of features.

### Experiment B - Serum Evaluation

Canines are fed a control diet or a diet consisting of Example 3 for 13 consecutive weeks with no cross-over. There was no pre-feed period. The control diet contains lower levels of dietary sources of fiber-bound polyphenols than the experimental diet and is matched for total fiber content, but the fiber was largely in insoluble form.

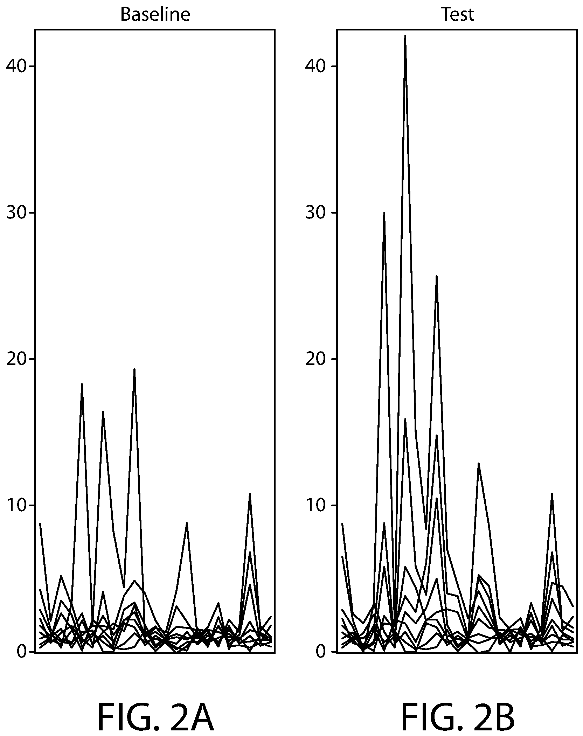

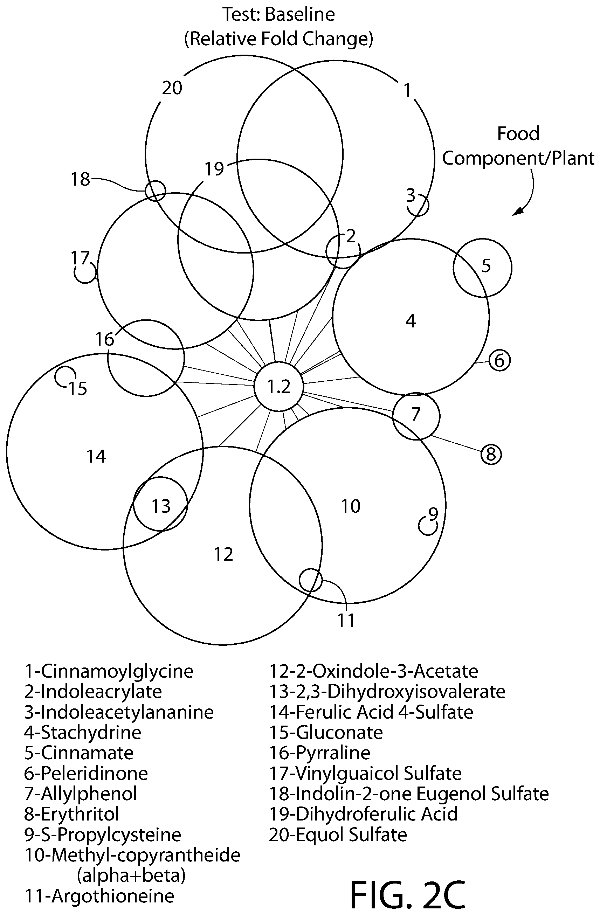

Serum from the same subjects at time points matched to fecal collections are also analyzed for the same metabolomic structures. Specifically, the serum samples are analyzed for differences in levels of microbial polyphenol metabolites and their Phase-II detoxication conjugated foms. Results of a multivariate profiling analysis of the polyphenols and metabolites are shown in Figures 2A & 2B, wherein the X axis depicts a series of serum-borne (un)conjugated microbial metabolites of polyphenols, and wherein the Y axis scales relative levels of each of these found in the serum at baseline (Figure 2A) and after consuming a test diet comprising a composition of Example 3 (Figure 2B). A pathway enrichment analysis is also performed on the relative levels of serum-borne (un)conjugated microbial metabolites of polyphenols (see Figure 2C), with the food/plant component cluster showing a statistically significant increase in test diet-fed dogs relative to baseline. As the data demonstrates, a comparison of relative levels of serum polyphenols and post-biotics indicates that a diet consisting of Example 3 increased targeting of these bioactive agents to the colon more effectively than a diet consisting of a commercially available high-quality canine maintenance diet that did not include the inventive combination of features.

### Experiment C - Microbial-derived Post-biotics

Serum levels of microbial-derived post-biotics are evaluated in canines fed an exemplary composition of the present invention (Example 3), which includes the inventive controlled release matrix, and a comparative composition, which does include the inventive controlled release matrix. Serum samples from canines fed the comparative composition and Example 3 for 13 weeks are analyzed for differences in levels of microbial polyphenol metabolites and their Phase-II detoxication conjugated forms. Pathway enrichment analysis is performed on the relative serum levels of (un)conjugated microbial metabolites of polyphenols. The results indicate that bacterial metabolites of certain food components appeared to a greater extent in the serum of canines fed Example 3 versus canines fed the comparative composition. These results further demonstrate the ability of the inventive compositions to provide targeted delivery of a benefit agent, e.g. a polyphenol.

### Example 4

An exemplary pet food composition (Example 4) is prepared as set forth in Table 12 (below). All amounts are provided in weight percent, based upon total weight of the pet food composition. The composition is formulated according to the nutrition standards set forth by AAFCO and the NRC.

**Table 12**

| **Ingredient** | **Example 4** | **Comp. Ex. I** |
|---|---|---|
| | **w/w%** | |
| Corn starch | 31.10 | 48.11 |
| Hydrolyzed chicken liver and heart | 37.00 | 32.00 |
| Soybean oil, crude, degummed | 3.60 | 4.66 |
| Cellulose, pelleted | -- | 3.94 |
| Chicken, liver, digest, optimizer LDPE H | 2.00 | 2.00 |
| Lactic acid, food grade | 1.50 | 1.50 |
| Calcium carbonate | 1.22 | 1.22 |
| Dicalcium phosphate | 1.22 | 1.22 |
| Choice White Grease/Phos Acid | 1.25 | 1.00 |
| Flav Gen#1 + CWG | 1.25 | 0.75 |
| Glyceryl monostearate | 0.74 | 0.74 |
| Potassium chloride | 0.69 | 0.69 |
| Natural flavor, Pork, Liver, Digest, D'T | 0.75 | 0.50 |
| Sodium chloride, iodized | 0.44 | 0.44 |
| Choline chloride, liquid, 70% | 0.38 | 0.38 |
| Methionine, dl | 0.30 | 0.30 |
| Vitamin, premix, canine/feline, z/d, dry | 0.20 | 0.20 |
| Sodium tripolyphosphate | 0.15 | 0.15 |
| Vitamin premix | 0.12 | 0.12 |
| Mineral, premix, 2305 | 0.07 | 0.07 |
| Taurine | 0.02 | 0.02 |
| Pecan shells, ground | 7.00 | -- |
| Flax seed whole brown | 3.00 | -- |
| Citrus pulp, dried ground | 2.50 | -- |
| Beet pulp, ground, fine | 2.50 | -- |
| Cranberry pomace | 1.00 | -- |

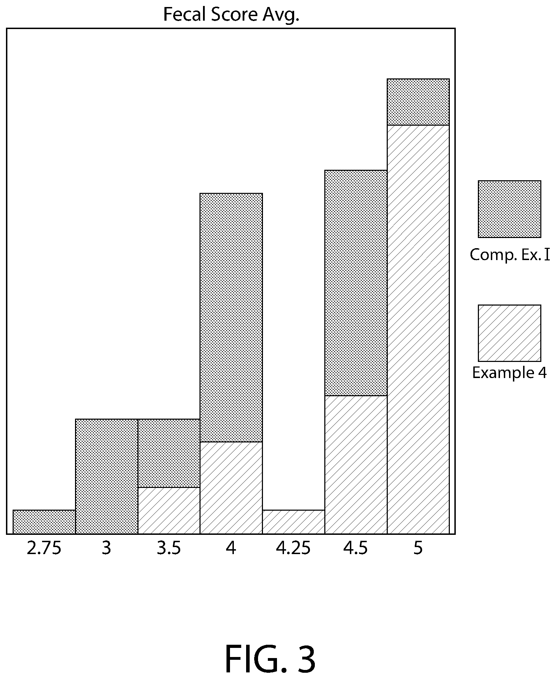

A clinical intervention trial was performed with both healthy canines and canines suffering from irritable bowel disease (IBD). Stools were collected after four (4) weeks of consuming either the Control (Comp. Ex. I) or Test diet (Example 4). Stools were visually subjected to the Hill's Pet Nutrition Scale of 1 to 5, wherein 1 indicates watery diarrhea and 5 indicates a well formed, hard stool. The histogram depicted in Figure 3 indicates the average of two stool scores for each dog when consuming a composition according to Comp. Ex I (solid gray portion of the histogram bars) or consuming a composition according to Example 4 (hatched portion of the histogram bars). The portions of the bars of the histogram at the higher scores were dominated by stools from dogs fed a composition according to Example 4, whereas the lower stool scores were observed more frequently in dogs consuming a composition according to Comp. Ex I. In particular, although numerically fewer, low scores indicate potential for gastrointestinal distress and can elicit concern in caregivers. The fact that all stool scores 3 and lower were only observed in the dogs consuming a composition according to Comp. Ex. 1 indicates the potential for compositions according to Example 4 to mitigate and remediate low stool scores and bring assurance to canine caregivers.

### Example 5

An exemplary pet food composition (Example 5) is prepared as set forth in Table 13 (below). All amounts are provided in weight percent, based upon total weight of the pet food composition. The composition is formulated according to the nutrition standards set forth by AAFCO and the NRC.

**Table 13**

| **Ingredient** | **Example 5** | **Comp. Ex. II** |
|---|---|---|
| | **w/w%** | |
| Chicken meal | 15.36 | 15.36 |
| Rice, brewers | 8.64 | 8.64 |
| Eggs, dried, granulated | 8.00 | 8.00 |
| Corn, gluten, meal | 7.62 | 7.62 |
| Sorghum, whole | 5.00 | 5.00 |
| Choice white grease/Phos Acid | 4.00 | 4.00 |
| Palatant, 12L, Liquid | 3.00 | 3.00 |
| Lactic acid, food grade | 1.50 | 1.50 |
| Soybean oil, crude, degummed | 1.05 | 1.05 |
| Palatant, ITE2, Dry | 1.00 | 1.00 |
| Potassium chloride | 0.89 | 0.89 |
| Sodium chloride, iodized | 0.61 | 0.61 |
| Calcium carbonate | 0.41 | 0.41 |
| Dicalcium phosphate | 0.25 | 0.25 |
| Vitamin E, oil, 29% | 0.17 | 0.17 |
| Choline chloride, liquid, 70% | 0.16 | 0.16 |
| Vitamin premix | 0.16 | 0.16 |
| Mineral, premix, 2305 | 0.06 | 0.06 |
| Vitamin premix | 0.04 | 0.04 |
| Tryptophan | 0.04 | 0.04 |
| Taurine | 0.04 | 0.04 |
| Cellulose, pelleted | -- | 1.50 |
| Corn, yellow, whole | 26.00 | 40.00 |
| Pecan shells, ground | 7.00 | -- |
| Flax seed whole brown | 3.00 | -- |
| Citrus pulp, dried ground | 2.50 | -- |
| Beet pulp, ground, fine | 2.50 | 0.50 |
| Cranberry pomace | 1.00 | -- |

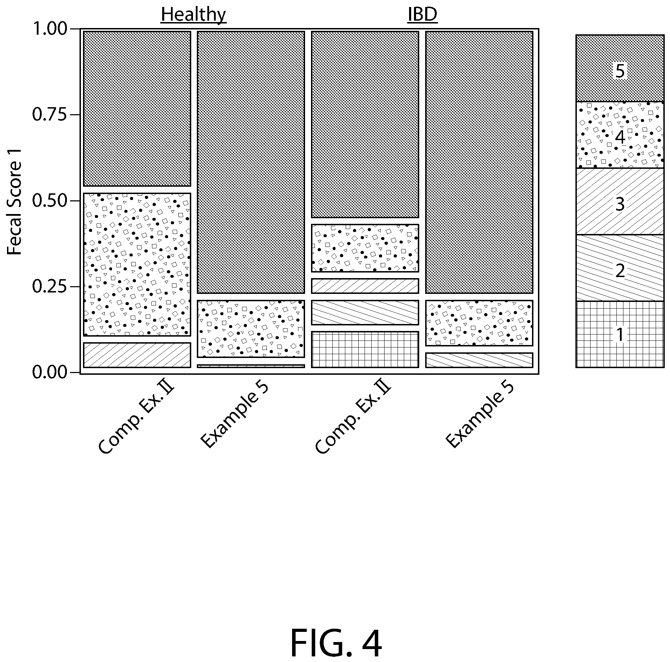

A clinical intervention trial was performed with both healthy canines and canines suffering from irritable bowel disease (IBD). Stools were collected after four (4) weeks of consuming either the Control (Comp. Ex. II) or Test diet (Example 5). Stools were visually subjected to the Hill's Pet Nutrition Scale of 1 to 5, wherein 1 indicates watery diarrhea and 5 indicates a well formed, hard stool. As evidenced by the data described in Figure 4, a diet comprising the inventive ingredient combination of the present invention (Example 5) demonstrates a clinically significant improvement in stool quality versus the stool quality resulting from a diet which does not include the inventive ingredient combination of the present invention (Comp. Ex. II).

Specifically, Figure 4 shows, in a stacked format, the proportions of stool scores produced while Healthy (bars 1 and 2 from left) and IBD dogs (bars 3 and 4 from left) were consuming Comp. Ex II (bars 1 and 3) or Example 5 (bars 2 and 4). The greater the visual portion of the bar filled, the greater the proportion of the associated stool score being manifest in that health condition on that diet.

The results illustrated in Figure 4 are also provided in tabular format below (Table 14).

**Table 14**

| | **Observed Fecal Score** | **1** | **2** | **3** | **4** | **5** |
|---|---|---|---|---|---|---|
| **IBD** | CONTROL | 4 | 3 | 2 | 5 | 18 |
| | TEST | | 2 | | 5 | 25 |
| **HEALTHY** | CONTROL | | | 3 | 14 | 15 |
| | TEST | | | 1 | 6 | 25 |

Although several embodiments of the invention have been disclosed in the foregoing specification, it is understood by those skilled in the art that many modifications and other embodiments of the invention will come to mind to which the invention pertains, having the benefit of the teaching presented in the foregoing description and associated drawings. It is thus understood that the invention is not limited to the specific embodiments disclosed hereinabove, and that many modifications and other embodiments are intended to be included within the scope of the appended claims. Moreover, although specific terms are employed herein, as well as in the claims which follow, they are used only in a generic and descriptive sense, and not for the purposes of limiting the described invention, nor the claims which follow.

Particular embodiments of the present invention include the following embodiments E1 to E26:
E1 A controlled release pet food composition comprising:
   a matrix comprising:
      a fiber component comprising a high solubility fiber source and low solubility fiber source, and
      a polyphenol source;
   wherein the matrix is adapted to deliver the polyphenol source to the lower gastrointestinal (GI) tract of a mammal after ingestion by the mammal.
E2 The pet food composition of E1 , wherein the weight ratio of high solubility fiber source to low solubility fiber source is from about 1:20 to about 1: 1.
E3 The pet food composition of E1 or E2 , wherein the weight ratio of high solubility fiber source to low solubility fiber source is from about 1:15 to about 1:2.
E4 The pet food composition of any of E1 to E3 , wherein the weight ratio of high solubility fiber source to low solubility fiber source is from about 1:10 to about 1:3.
E5 The pet food composition of any of E1 to E4 , wherein the weight ratio of high solubility fiber source to low solubility fiber source is from about 1:5 to about 1:3.
E6 The pet food composition of any of E1 to E5 , wherein the weight ratio of high solubility fiber source to low solubility fiber source is about 1:4.
E7 The pet food composition of any of E1 to E6 , wherein the high solubility fiber source comprises oat bran, buckwheat groats, pea bran, barley, tomato pomace, citrus pulp, beet pulp, and a combination of two or more thereof.
E8 The pet food composition of any of E1 to E7 , wherein the low solubility fiber source comprises a cellulosic material, a pecan fiber, or a combination thereof.
E9 The pet food composition of any of E1 to E8 , wherein the polyphenol source is of food or plant origin.
E10 The pet food composition of E9 , wherein the polyphenol source of food origin comprises a polyphenol of fruit or vegetable origin.
E11 The pet food composition of any of E1 to E10 , wherein the polyphenol source comprises a flavonoid or a phenolic acid.
E12 The pet food composition of any of E1 to E11 , wherein the polyphenol source provides a polyphenol selected from: dehydroxy rosmarinic acid, Coumaroylnepitrin, eupafolin, carnosol, scutellarin, kaempferol, rosmarinic acid, rosmanol, cirsimaritin, luteolin, 6-methoxy-luteolin, 7-epirosmannol, quercetin, catechin, hesperidin, cyanidin, and a combination of two or more thereof.
E13 The pet food composition of any of E1 to E12 , further comprising a source of hydrolyzed animal or plant protein comprising an amino acid profile.
E14 The pet food composition of E13 , wherein the source of hydrolyzed animal or plant protein comprises chicken liver.
E15 The pet food composition of E13 or E14 , wherein the source of hydrolyzed animal or plant protein is present in an active content of from about 25 to about 45 wt. %.
E16 The pet food composition of any of E1 to E15 , further comprising high docosahexaenoate fish oil.
E17 The pet food composition of E16 , wherein the active content of the high docosahexaenoate fish oil is from about 0.5 to about 2.5 wt. %.
E18 The pet food composition according to any one of E1 to E6 and E9 to E17 , wherein the fiber component comprises pecan shells; flax seed; citrus pulp; beet pulp; cranberry pomace; or a combination of two or more thereof.
E19 The pet food composition according to E18 , comprising:
   from about 1 to about 10 wt.% of pecan shells;
   from about 1 to about 5 wt.% of flax seed;
   from about 1 to about 5 wt.% of citrus pulp;
   from about 1 to about 5 wt.% of beet pulp; and
   from about 0.1 to about 2 wt.% of cranberry pomace.
E20 The pet food composition according to E18 or E19 , comprising:
   from about 2.5 to about 8 wt.% of pecan shells;
   from about 2 to about 4 wt.% of flax seed;
   from about 2 to about 3 wt.% of citrus pulp;
   from about 2 to about 3 wt.% of beet pulp; and
   from about 0.5 to about 1.5 wt.% of cranberry pomace.
E21 The pet food composition according to any one of E18 to E20 , comprising:
   about 7 wt.% of pecan shells;
   about 3 wt.% of flax seed;
   about 2.5 wt.% of citrus pulp;
   about 2.5 wt.% of beet pulp; and
   about 1 wt.% of cranberry pomace.
E22 The pet food composition according to any one of E18 to E20 , comprising:
   about 3.5 wt.% of pecan shells;
   about 1.5 wt.% of flax seed;
   about 1.25 wt.% of citrus pulp;
   about 1.25 wt.% of beet pulp; and
   about 0.5 wt.% of cranberry pomace.
E23 A method for treating, preventing, or ameliorating a symptom of an inflammatory disease, condition or disorder, e.g. inflammatory bowel disease, in a mammal, comprising administering an effective amount of the composition according to any of E1 to E22 , to a mammal in need thereof.
E24 A method for beneficially manipulating the gut microflora of a mammal, comprising administering an effective amount of the composition according to any one of E1 to E22 , to a mammal in need thereof.
E25 A method of forming a pet food composition, comprising the steps of:
   extruding a matrix comprising:
      a fiber component comprising a high solubility fiber source and low solubility fiber source, and
      a polyphenol source;
   applying a surface coating to the kibble;
   wherein the matrix is adapted to deliver the polyphenol source to the lower gastrointestinal (GI) tract of a mammal after ingestion by the mammal.
E26 The method according to E25 , wherein the surface coating comprises a palatant.

## Claims

1. A controlled release pet food composition comprising:
a matrix comprising:
a fiber component comprising a high solubility fiber source and low solubility fiber source, wherein the fiber component comprises a weight ratio of a high solubility fiber source to low solubility fiber source of from about 1:20 to about 1:1; and
a polyphenol source;
wherein the matrix is adapted to deliver the polyphenol source to the lower gastrointestinal (GI) tract of a mammal after ingestion by the mammal.

2. The pet food composition of claim 1, wherein the weight ratio of high solubility fiber source to low solubility fiber source is from about 1:20 to about 1:2, optionally, about 1:15 to about 1:2, about 1:10 to about 1:3, about 1:5 to about 1:3, or about 1:4.

3. The pet food composition of any foregoing claim, wherein the high solubility fiber source comprises oat bran, buckwheat groats, pea bran, barley, tomato pomace, citrus pulp, beet pulp, or a combination of two or more thereof, optionally, wherein the low solubility fiber source comprises a cellulosic material, a pecan fiber, or a combination thereof.

4. The pet food composition of any foregoing claim, wherein the polyphenol source is of food or plant origin, optionally, wherein the polyphenol source is of food origin and comprises a polyphenol of fruit or vegetable origin, further optionally, wherein the polyphenol source comprises a flavonoid or a phenolic acid.

5. The pet food composition of any foregoing claim, wherein the polyphenol source provides a polyphenol selected from: dehydroxy rosmarinic acid, Coumaroylnepitrin, eupafolin, carnosol, scutellarin, kaempferol, rosmarinic acid, rosmanol, cirsimaritin, luteolin, 6-methoxy-luteolin, 7-epirosmannol, quercetin, catechin, hesperidin, cyanidin, and a combination of two or more thereof.

6. The pet food composition of any foregoing claim, further comprising a source of hydrolyzed animal or plant protein comprising an amino acid profile, optionally, wherein the source of hydrolyzed animal or plant protein comprises chicken liver, further optionally, wherein the source of hydrolyzed animal or plant protein is present in an active content of from about 25 to about 45 wt. %.

7. The pet food composition of any foregoing claim, further comprising high docosahexaenoate fish oil, optionally, wherein the active content of the high docosahexaenoate fish oil is from about 0.5 to about 2.5 wt. %.

8. The pet food composition according to any one of claims 1, 2, and 4 to 7, wherein the fiber component comprises pecan shells, flax seed, citrus pulp, beet pulp, cranberry pomace, or a combination of two or more thereof.

9. The pet food composition according to claim 8, comprising:
from about 1 to about 10 wt.% of pecan shells, optionally, about 2.5 to about 8 wt.% of pecan shells;
from about 1 to about 5 wt.% of flax seed, optionally, about 2 to about 4 wt.% of flax seed;
from about 1 to about 5 wt.% of citrus pulp, optionally, about 2 to about 3 wt.% of citrus pulp;
from about 1 to about 5 wt.% of beet pulp, optionally about 2 to about 3 wt.% of beet pulp; and
from about 0.1 to about 2 wt.% of cranberry pomace, optionally, about 0.5 to about 1.5 wt.% of cranberry pomace.

10. The pet food composition according to any one of claims 8 and 9, comprising:
about 7 wt.% of pecan shells;
about 3 wt.% of flax seed;
about 2.5 wt.% of citrus pulp;
about 2.5 wt.% of beet pulp; and
about 1 wt.% of cranberry pomace.

11. The pet food composition according to any one of claims 8 and 9, comprising:
about 3.5 wt.% of pecan shells;
about 1.5 wt.% of flax seed;
about 1.25 wt.% of citrus pulp;
about 1.25 wt.% of beet pulp; and
about 0.5 wt.% of cranberry pomace.

12. A pet food composition according to any of claims 1-11 for use in a method for treating, preventing, or ameliorating a symptom of an inflammatory disease, condition or disorder in a mammal, or for use in a method for beneficially manipulating the gut microflora of a mammal.

13. A method of forming a pet food composition, comprising the steps of:
extruding a matrix comprising:
a fiber component comprising a high solubility fiber source and low solubility fiber source, and
a polyphenol source;
applying a surface coating to the kibble;
wherein the matrix is adapted to deliver the polyphenol source to the lower gastrointestinal (GI) tract of a mammal after ingestion by the mammal.

14. The method according to claim 13, wherein the surface coating comprises a palatant.

15. The use of a matrix comprising a fibrillary network comprising: a fiber component comprising a high solubility fiber source and low solubility fiber source, wherein the fiber component comprises a weight ratio of a high solubility fiber source to low solubility fiber source of from about 1:20 to about 1:1; and a polyphenol source for the manufacture of a pet food composition for delivering the polyphenol source to the lower gastrointestinal tract of a mammal after ingestion by the mammal.
